# NEUE EUROPÄISCHE PATENTSCHRIFT

(11) **EP 2 507 543 B2**
(45) Veröffentlichungstag und Bekanntmachung des Hinweises auf die Entscheidung über den Einspruch: **30.08.2017**
(45) Hinweis auf die Patenterteilung: 30.04.2014
(21) Anmeldenummer: 10782631.5
(22) Anmeldetag: 30.11.2010
(51) Int. Cl.: F21S 8/02

(54) **WAND- UND/ODER DECKENSYSTEM ZUR BELEUCHTUNG**
WALL AND/OR CEILING SYSTEM FOR ILLUMINATION
SYSTÈME À MONTER AU MUR ET/OU AU PLAFOND POUR ÉCLAIRAGE

(30) Priorität: 30.11.2009 DE 102009056279
(43) Veröffentlichungstag der Anmeldung: 10.10.2012
(73) Patentinhaber: Zumtobel Lighting GmbH, 6850 Dornbirn (AT)
(72) Erfinder: DINNEBIER, Johannes, 10555 Berlin (DE); BLIESKE, Jan, 10587 Berlin (DE)
(74) Vertreter: Thun, Clemens
(86) Internationale Anmeldenummer: PCT/EP2010/068547
(87) Internationale Veröffentlichungsnummer: WO 2011/064396

(56) Entgegenhaltungen:
- WO-A2-01/77578
- DE-A1- 10 360 943
- US-A- 5 785 411
- US-A- 6 092 913

## Beschreibung

Die vorliegende Erfindung betrifft eine Befestigungsvorrichtung zur Befestigung wenigstens einer Leuchteneinheit in einer länglichen Einbauöffnung einer Wand oder Decke, wobei die Befestigungsvorrichtung einen Kanal zur Aufnahme der wenigstens einen Leuchteneinheit bildet. Ferner betrifft die vorliegende Erfindung ein Wand- und/oder Deckensystem, bei dem eine entsprechende Befestigungsvorrichtung zum Einsatz kommt.

Systeme dieser Art sind in vielfacher Form bekannt und werden in der Regel mit Hilfe von Einbauleuchten realisiert. Diese werden in Längsrichtung hintereinander in einer Einbauöffnung der Wand oder Decke angeordnet. Aus gestalterischen Gründen ist man in diesen Fällen bestrebt, die Systeme derart auszuführen, dass außer einer die Einbauöffnung überdeckenden Lichtemissionsplatte keine oder möglichst wenig Elemente des Systems sichtbar sind. Auf diese Weise werden quasi leuchtende Linien geschaffen.

In der modernen Architektur werden immer häufiger Räume realisiert, welche keine geraden Wand- oder Deckenflächen aufweisen, sondern gewölbt ausgebildet sind. Auch hier sind die Architekten bestrebt, die Beleuchtung der Räume durch die zuvor genannten Lichtlinien zu realisieren. Die konkrete Ausführung eines derartigen Systems ist dann jedoch schwierig, da Einbauleuchten üblicherweise für flache bzw. ebene Flächen ausgelegt sind.

Aufgabe der vorliegenden Erfindung ist es dementsprechend, eine Lösung anzugeben, Lichtlinien auch in einem gekrümmten Wand- und/oder Deckensystem zu bilden. Dies soll insbesondere auf einfache und kostengünstige Art und Weise im Hinblick auf die Herstellung und Montage des Systems erfolgen.

Dokument US 6 092 913 zeigt ein Wand- und/oder Deckensystem wie oben erwähnt.

Die Aufgabe wird durch eine Befestigungsvorrichtung zur Befestigung wenigstens einer Leuchteneinheit in einer Einbauöffnung einer Wand oder Decke, welche die Merkmale des Anspruchs 1 aufweist bzw. durch eine Wand- und/oder Deckensystem gemäß Anspruch 7 oder Anspruch 13. Vorteilhafte Weiterbildungen der Erfindung sind Gegenstand der abhängigen Ansprüche.

Als Leuchteneinheit kann beispielsweise eine so genannte Balkenleuchte zum Einsatz kommen, wie sie aus der österreichischen Gebrauchsmusteranmeldung G 322/2008 der Anmelderin bekannt ist.

Nachfolgend soll die Erfindung anhand der beiliegenden Zeichnung näher erläutert werden. Es zeigen:
- Figuren 1 und 2: Ansichten eines erfindungsgemäßen Wand- und/oder Deckensystems zur Beleuchtung, wobei auf die Darstellung der Wand oder Decke verzichtet wurde;
- Figur 3: einen U-förmigen Profilkörper zur Bildung des Kanals zur Aufnahme der Leuchteneinheiten;
- Figur 4: eine Schnittdarstellung des Profilkörpers;
- Figuren 5 und 6: Ansichten von Metallprofilen, durch die der Profilkörper gebildet wird;
- Figur 7 bis 9: Ansichten des Profilköpers mit darin angeordneten Leuchteneinheiten;
- Figuren 10 bis 12: Schnittdarstellungen des Profilkörpers mit verschiedenen Möglichkeiten zur Befestigung einer transparenten Lichtemissionsplatte;
- Figuren 13 bis 15: verschiedene Ansichten eines in unterschiedlichen Richtungen gebogenen Profilkörpers;
- Figur 16: eine zweite Variante eines erfindungsgemäß ausgestalteten Profilkörpers;
- Figur 17: eine dritte Variante eines erfindungsgemäßen Profilkörpers;
- Figuren 18 bis 21: eine vorteilhafte Weiterbildung des in den vorherigen Figuren dargestellten Systems;
- Figur 22: eine Möglichkeit zur Befestigung der lichtdurchlässigen Abdeckung an den Endbereichen des Kanals und
- Figuren 23 bis 26: eine alternative Möglichkeit zur Bildung eines in zwei Richtungen biegbaren Kanals.

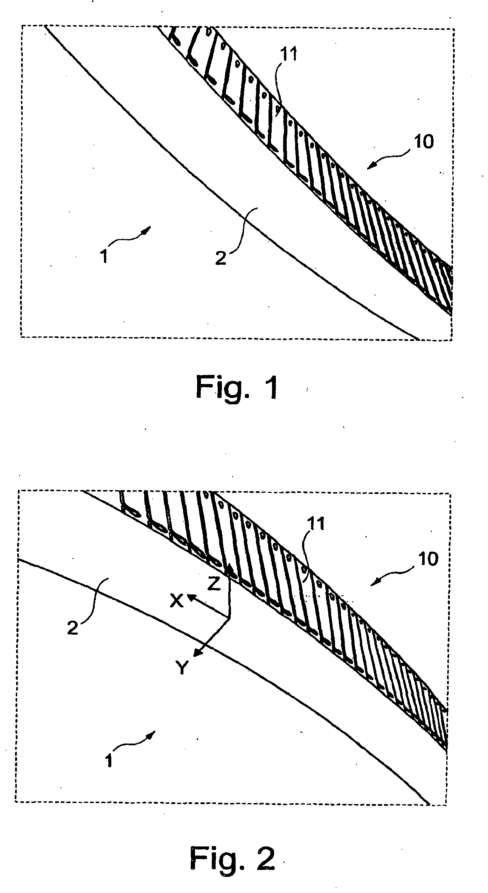

In den Figuren 1 und 2 sind Ansichten eines ersten Ausführungsbeispiels eines erfindungsgemäßen Wand- und/oder Deckensystems 1 dargestellt. Wesentlicher Bestandteil des Systems ist eine Befestigungsvorrichtung 10, die einen länglichen, Kanal 11 zur Aufnahme von Leuchteinheiten bildet. Die offene Unterseite des Kanals 11 bildet eine Lichtaustrittsöffnung für die Leuchteneinheiten und ist mit einer länglich, transparenten Lichtemissionsplatte abgedeckt. Diese ist vorzugsweise derart ausgestaltet, dass das Innere des Kanals 11 bzw. die darin angeordneten Leuchteneinheiten nicht oder nahezu nicht erkennbar sind. Werden diese Leuchteneinheiten nunmehr im Wesentlichen kontinuierlich in dem Kanal 11 angeordnet, so entsteht der Eindruck einer langgestreckten durchgehenden leuchtenden Linie.

Die Montage des erfindungsgemäßen Wand- und/oder Deckensystems 1 erfolgt in einer Decke, die in den Figuren 1 und 2 nicht dargestellt ist. Diese Decke ist als abgehängtes System ausgeführt, d.h. die Rohdecke wird beispielsweise mittels Gipskartonplatten kaschiert, welche in einem gewissen Abstand zu der Rohdecke angeordnet sind. In diesen Gipskartonplatten ist dann eine längliche Einbauöffnung ausgebildet, in der das System 1 montiert ist.

Grundsätzlich waren derartige Wand- und/oder Deckensysteme bereits bekannt. Die Besonderheit des in den Figuren 1 und 2 dargestellten und nachfolgend näher beschriebenen Systems besteht allerdings darin, dass das System 1 gekrümmten Bahnen folgen kann. Im Gegensatz zu klassischen Wand- oder Deckensystemen, welche sich lediglich entlang einer Geraden erstrecken, besteht nunmehr also die Möglichkeit, das System auch in gewölbte Wände oder Decken oder sogar noch komplexere Strukturen zu integrieren. Dies wird durch eine besondere Ausgestaltung der Befestigungsvorrichtung 10 ermöglicht, welche nachfolgend beschrieben werden soll.

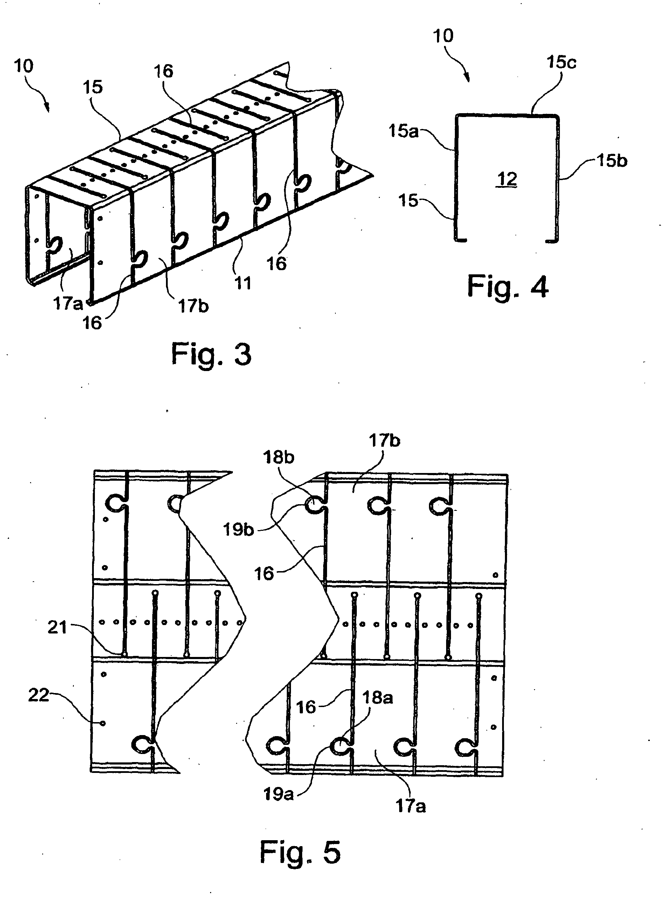

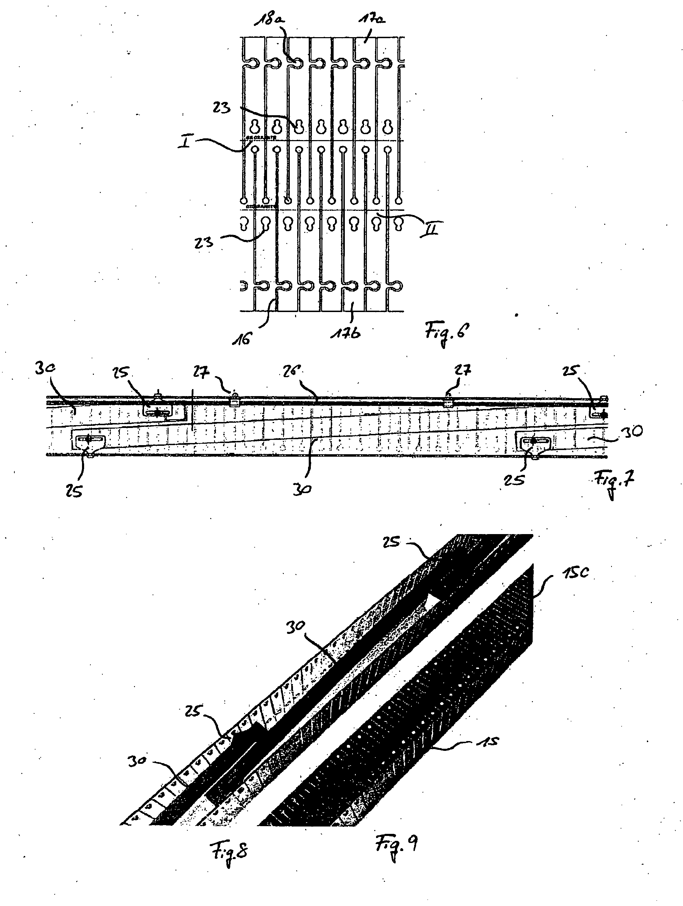

Wesentliches Element der erfindungsgemäßen Befestigungsvorrichtung 10 ist wie bereits erwähnt der längliche Kanal 11, der einen Aufnahmeraum zur Aufnahme der Leuchteneinheiten bildet. Dieser Kanal 11 ist entsprechend der Schnittdarstellung in Figur 4 zur Unterseite hin geöffnet. Er wird zumindest über einen gewissen Abschnitt der Befestigungsvorrichtung hinweg aus einem einstückigen Profilkörper 15 gebildet, der U-förmig ausgestaltet ist. Bei bisherigen Lösungen, bei denen sich das Wand- und/oder Deckensystem entlang einer Geraden erstreckte, wurde der Kanal durch ein entsprechend geformtes durchgängiges Profilelement gebildet. Die Besonderheit der erfindungsgemäßen Lösung besteht nunmehr darin, dass der Profilkörper 15, wie beispielsweise der Ansicht in Figur 3 entnommen werden kann, über seine gesamte Länge hinweg mit Schlitzen 16 versehen ist. Die Anordnung und Ausgestaltung dieser Schlitze 16 kann insbesondere Figur 5 entnommen werden, welche das als Ausgangsbasis verwendete Profilteil zeigt, bevor es zu der in den Figuren 3 und 4 dargestellten U-Form verformt wurde, was in erster Linie durch Biegen um die beiden in Fig. 6 angedeuteten Biegekanten 1 und II erfolgt.

Eine erste Besonderheit dieser Schlitze 16 besteht dabei darin, dass sie sich jeweils von den freien Endbereichen, also den späteren Unterseiten der Seitenschenkel 15a und 15b des Profilkörpers 15 bis in den mittleren Bereich, der den späteren Mittelschenkel 15c bildet, erstrecken. Die Seitenschenkel werden durch diese Schlitze 16 also in einzelne voneinander getrennte Segmente 17a bzw. 17b unterteilt. Aufgrund der alternierenden Anordnung der Schlitze 16 sind allerdings die Segmente 17a und 17b versetzt zueinander angeordnet, wie insbesondere Figur 5 zu entnehmen ist. Wie später erkennbar ist, ermöglicht es diese Anordnung der Schlitze 16, den Profilkörper 15 in unterschiedliche Richtungen zu verformen bzw. zu biegen. Im Bereich der Seitenschenkel 17a und 17b sind die Schlitze 16 allerdings in einem kurzen Abschnitt schleifenförmig ausgebildet bzw. bilden eine Wölbung, sodass jedes Segment 17a bzw. 17b einen seitlichen Vorspruch 18a bzw. 18b aufweist, der in eine entsprechende etwa kreisförmig ausgebildete Ausnehmung 19a, 19b des nachfolgenden Segments 17a, 17b ragt. Diese Vorsprünge 18a, 18b bilden Biegebegrenzungen, über welche ein Verformen des Profilkörpers 15 auf einen bestimmten Biegeradius begrenzt wird.

An ihrem Ende münden die Schlitze 16 ferner in größere, beispielsweise kreisförmige Ausnehmungen 20, welche die Biegefähigkeit des Profilkörpers 15 weiter erhöhen. Bei dem Ausführungsbeispiel von Figur 5 sind ferner im Bereich des Mittelschenkels Bohrungen 21 vorgesehen, welche zu Montagezwecken genutzt werden können. An einzelnen der Seiteschenkel 17a bzw. 17b sind ferner weitere Bohrungen 22 vorgesehen, welche zur Befestigung der in dem Aufnahmeraum 12 anzuordnenden Leuchteneinheiten genutzt werden können.

Figur 6 zeigt eine leicht abgewandelte Form des in Figur 5 dargestellten Profilteils. Hierbei ist der Abstand zwischen benachbarten Schlitzen 16 geringer, was zur Folge hat, dass die einzelnen Segmente 17a und 17b der Seitenschenkel schmäler sind. Die an den Enden der Schlitze vorgesehenen kreisförmigen Ausnehmungen 20 sind nunmehr etwas größer bemessen und können zusätzlich auch als Montagebohrungen genutzt werden. Ferner weist jedes Segment 17a, 17b schlüssellochförmig ausgebildete Bohrungen 23 auf, die wiederum zur Montage verschiedenster Komponenten des Systems genutzt werden können.

Die Anordnung der Leuchteneinheiten in dem Kanal 11 kann den Figuren 7 bis 9 entnommen werden. Wie bereits erwähnt handelt es sich bei diesen Leuchteneinheiten 30 vorzugsweise um längliche Balkenleuchten. Diese werden mit Hilfe von Installationsblechen 25, welche in die Haltebohrungen 23 eingehängt werden, befestigt. Die Installationsbleche 25 sind dabei jeweils an den Enden einer Leuchteneinheit 30 sowie einander gegenüberliegenden Seitenwänden des Kanals 11 angeordnet. Hierdurch ergibt sich die in den Figuren gezeigte leichte Schrägstellung der Leuchteneinheiten 30. Vorzugsweise sind dabei die Leuchteneinheiten 30 derart montiert, dass sie in ihren Endbereichen leicht überlappen. Das Auftreten dunklerer Stellen im Übergangsbereich zwischen zwei aufeinanderfolgenden Leuchteneinheiten 30 wird auf diese Weise vermieden. Die Stromversorgung der Leuchteneinheiten 30 erfolgt mit Hilfe einer Durchgangsverdrahtung 26, welche in regelmäßigen Abständen über Kabelhalter 27 gehalten ist, die wiederum in die Montagebohrungen 23 eingehängt wurden. Ferner könnten auf diese Weise auch Leitungen zur Signalübertragung angeordnet werden.

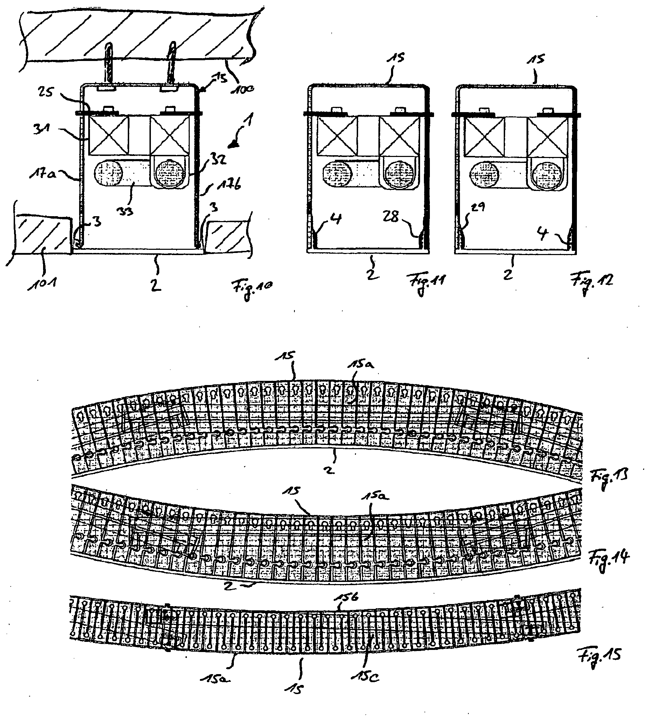

Die Figuren 10 bis 12 zeigen Schnittdarstellungen des erfindungsgemäßen Wand- und/oder Deckensystems 1, wobei unterschiedliche Möglichkeiten zur Anordnung einer Lichtemissionsplatte 2 dargestellt sind. Dargestellt ist ferner auch die Ausgestaltung der Leuchteneinheiten 30, welche aus einem länglichem Balken 31 bestehen, der an seinen Enden jeweils Fassungen 32 zur Halterung einer länglichen Lampe, beispielsweise einer Leuchtstofflampe 33 aufweist. Innerhalb des Balkens 31 können auch Lampenbetriebsgeräte, beispielsweise elektronische Vorschaltgeräte (EVG) oder dergleichen angeordnet sein.

Figur 10 zeigt darüber hinaus auch die Anordnung des Systems 1 in einer abgehängten Decke. Im dargestellten Ausführungsbeispiel wird hierbei der Profilkörper 15 über eine Schraubverbindung an der Roh- bzw. Betondecke 100 befestigt. Die von der Betondecke 100 beabstandet angeordneten Gipskartonplatten 101 schließen dabei im Wesentlichen bündig mit der Unterseite des Systems 1 ab. Selbstverständlich könnte die Befestigung bzw. Montage des Profilkörpers 15 in der abgehängten Decke auch anderweitig, beispielsweise mit Hilfe von Auflagewinkeln oder dergleichen erfolgen.

Figur 10 zeigt ferner eine erste Möglichkeit zur Anordnung der Lichtemissionsplatte 2 an dem System 1. Hierfür weisen die Seitenschenkel 17a und 17b des Profilkörpers 15 an ihren unteren Enden seitlich vorstehende Vorsprünge auf, auf welche seitliche Klemmprofile 3 der Lichtemissionsplatte 2 aufgeschnappt werden. Diese Klemmprofile könnten beispielsweise aus Silikon eines hohen Härtegrads bestehen, um eine feste Verbindung bzw. Anordnung an dem Profilkörper 15 zu ermöglichen. Die zur Lichtabgabe vorgesehene Fläche der Lichtemissionsplatte 2 hingegen besteht vorzugsweise aus einem eher flexiblen Material, um zu ermöglichen, dass die Platte 2 einer eventuellen gekrümmten Form des Systems 1 folgen kann. Es hat sich hierbei insbesondere herausgestellt, dass die Verwendung von Silikon eines geringen Härtegrades für die Lichtemissionsplatte 2 vorteilhaft ist. Einerseits wird hierdurch die erforderliche Flexibilität erzielt, andererseits kann eine Lichtabgabe in der gewünschten Form derart erfolgen, dass die in dem Kanal 11 angeordneten Komponenten des Systems 1 nicht sichtbar sind.

Die Varianten der Figuren 11 und 12 unterscheiden sich ausschließlich in der Art der Anordnung der Lichtemissionsplatte 2 an dem Profilkörper 15. Bei der Variante gemäß Figur 11 besteht die Lichtemissionsplatte wiederum aus Silikon eines geringen Härtegrades, wobei zur Befestigung an dem Profilkörper seitlich gezahnte Klemmstege 4 vorgesehen sind. An den Innenseiten der Seitenschenkel 15a, 15b sind dann zur Verrastung mit den Klemmstegen 4 vorgesehen Zahnleisten 28 vorgesehen. Auch bei der Variante gemäß Figur 12 weist die Lichtemissionsplatte 2 gezahnte Klemmstege 4 auf. Hier sind die Seitenschenkel 15a, 15b als Strangpressprofil mit einer innen liegenden Zahnleiste 29 ausgeführt.

Die Figuren 13 bis 15 zeigen nunmehr die verschiedenen Möglichkeiten, das erfindungsgemäße Wand- und/oder Deckensystem 1 zu verformen. Dies wird wie bereits erwähnt durch die entsprechende Ausgestaltung und Anordnung der Schlitze 16 ermöglicht. Diese Schlitze können durch Stanzen oder Fräsen in dem Profilkörper 15 eingebracht werden.

Wie nunmehr die beiden Seitenansichten des Systems 1 in den Figuren 13 und 14 zeigen, besteht zunächst die Möglichkeit, das System 1 in vertikaler Richtung, also um eine etwa senkrecht zur Längsachse des Kanals und horizontal verlaufende Biegeachse nach oben oder unten zu biegen bzw. zu krümmen. Die Figuren 13 und 14 zeigen dabei auch die Funktion der Biegebegrenzungen. Je nach Biegerichtung kommen dabei die Vorsprünge 18a mit ihren Endbereichen in Anlage gegen das benachbarte Segment, wobei die Biegung des Systems durch die Begrenzungen auf einen minimalen Radius beschränkt wird, der noch eine Anordnung der weiterhin geraden Leuchteneinheiten 30 ermöglicht.

Zusätzlich zu dieser Krümmung in vertikaler Richtung erlauben die Schlitze allerdings auch ein Verbiegen in horizontaler Richtung, wie die Aufsicht in Figur 15 zeigt. Auch hier wäre selbstverständlich eine Krümmung in entgegengesetzter Richtung denkbar. Anzumerken ist, dass sich die Begriffe "horizontal" und "vertikal" auf den Fall beziehen, dass das System 1 im wesentlichen in horizontaler Richtung verläuft, also beispielsweise in einer Decke eines Raums angeordnet ist.

Letztendlich kann also das System um zwei aufeinander senkrecht stehende Achsen Z und Y verbogen bzw. gekrümmt werden, sodass die gesamte Anordnung auch äußerst komplexen Decken- oder Wandstrukturen folgen kann. Diese Biegeachsen Y, Z, welche im Wesentlichen senkrecht zur Längsachse X des Systems 1 ausgerichtet sind, sind nochmals in dem in Figur 2 angedeuteten rechtwinkligen Koordinatensystem gezeigt.

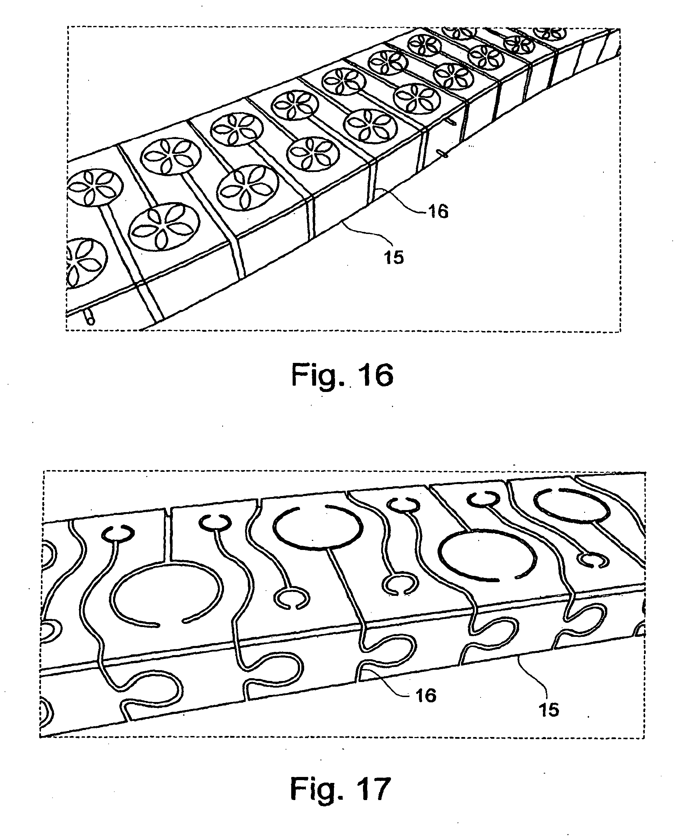

Die Figuren 16 und 17 zeigen zwei weitere alternative Ausführungsformen des Profilkörpers 15. Auch bei diesen Varianten sind alternierend angeordnete Schlitze 16 vorgesehen, welche bis in den Bereich des Mittelschenkels ragen und die Seitenschenkel des Profilkörpers in versetzt zueinander angeordnete Segmente unterteilen. Bei der Variante gemäß Figur 16 sind nunmehr keine Biegebegrenzungen vorgesehen. Stattdessen münden die Schlitze in speziell ausgestaltete Endbereiche im Mittelschenkel, durch welche die Flexibilität des gesamten Profilkörpers zusätzlich erhöht werden soll. Die Variante gemäß Figur 17 weist wiederum die Biegebegrenzungen auf. Hier sind nunmehr die Endbereiche der Schlitze anders ausgestaltet. Auch bei den Varianten der Figuren 16 und 17 ist allerdings die Möglichkeit eröffnet, den einstückig ausgestalteten Profilkörper um zwei aufeinander senkrecht stehende Achsen zu verformen.

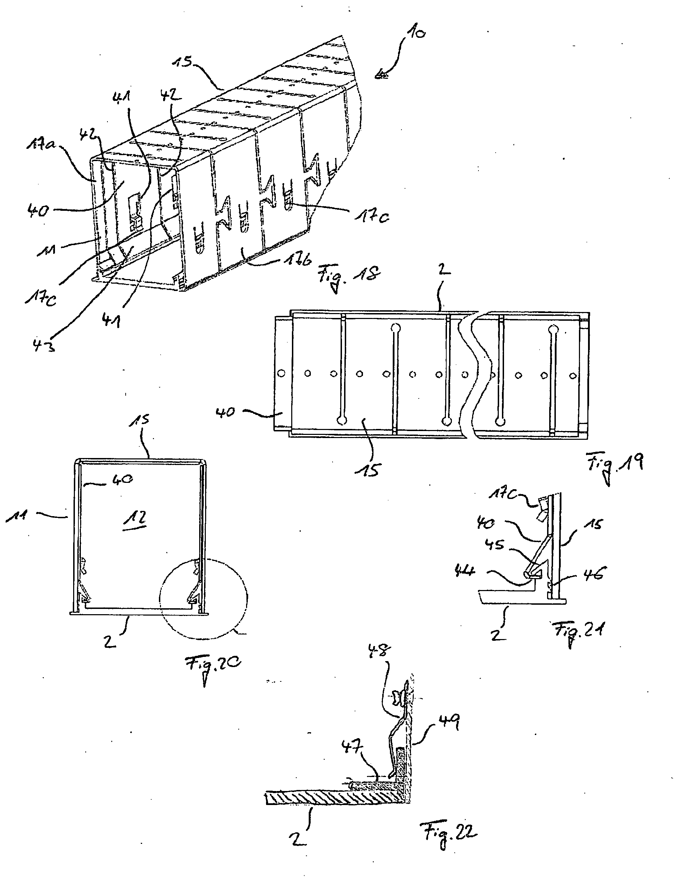

Anhand der Figuren 18 bis 21 soll nachfolgend eine vorteilhafte Weiterbildung des erfindungsgemäßen Systems beschrieben werden. Diese Weiterbildung basiert insbesondere auf dem in den Figuren 3 bis 5 dargestellten Profilkörper 15, wobei hier die Vorsprünge und Ausnehmungen zur Realisierung der Biegebegrenzung etwas anders gestaltet wurden. Ferner kann diese Weiterbildung auch bei den anderen Varianten zum Einsatz kommen.

Die Besonderheit der Weiterbildung der Figuren 18 bis 21 besteht darin, dass der Kanal 11 doppelwandig ausgebildet ist. Dies wird dadurch erreicht, dass im Inneren des U-förmigen äußeren Profilkörpers 15 ein weiterer Profilkörper 40 angeordnet ist, der eine Innenschale bildet. Auch dieser weitere Profilkörper 40 ist U-förmig ausgebildet und zur Unterseite hin geöffnet. Er weist - wie dargestellt - in regelmäßigen Abständen ausgebildete Rastöffnungen 41 auf, über welche eine Befestigung an dem äußeren Profilkörper 15 erfolgt. Dieser ist hierzu in seinen Segmenten 17a und 17b mit Ausstanzungen versehen, welche zu Rastlaschen 17c verformt wurden. Beim Einsetzen des Profilkörpers 40 von der Unterseite her in den Innenraum des äußeren Profilkörpers 15 greifen diese Laschen 17c in die Rastöffnungen 41 des inneren Profilkörpers 40 ein, sodass dieser an dem äußeren Profilkörper 15 befestigt wird.

Auch mit dem eingesetzten Profilkörper 40 soll die Flexibilität der Anordnung 10 beibehalten werden. Zu diesem Zweck ist auch der innere Profilkörper 40 mit Schlitzen 42 versehen, welche wiederum derart angeordnet und ausgebildet sind, dass sie ein Biegen des Körpers 40 um zwei im Wesentlichen senkrecht aufeinander stehende Achsen ermöglichen. Auch die Schlitze 42 sind also wie bei dem Körper 15 derart versetzt angeordnet, dass Segmente 43 gebildet werden, die derart ausgebildet sind, dass sie das angestrebte Verformen ermöglichen. Jedes Segment 43 weißt hierbei dann die Öffnung 41 zum Verrasten mit den Rastlaschen 17c auf.

Die Segmente 43 des inneren Profilkörpers 50 sind allerdings im Vergleich zu den äußeren Segmenten 17a und 17b des äußeren Profilkörpers 15 versetzt angeordnet. Sie decken hierbei die äußeren Schlitze 16 ab, was zur Folge hat, dass das Eindringen von Schmutz und Insekten in den Innenraum 12 des Kanals 11 verhindert wird. Gleichzeitig kann die Innenseite dieses inneren Profilkörpers 40 reflektierend ausgebildet, insbesondere entsprechend beschichtet sein, wodurch die Effizienz der gesamten Anordnung im Hinblick auf die Lichtabgabe erhöht wird.

Schließlich können die freien Enden der Innenschale bzw. des inneren Profilkörpers 40 auch dazu genutzt werden, die Halterung der Abdeckung 2 sicherzustellen, wie Figur 21 zeigt. Wiederum ist diese Abdeckung 2 vorzugsweise als Silikonelement ausgebildet, wobei dann die freien Enden des inneren Profilkörpers 40 entsprechend der Darstellung in den Figuren 20 und 21 derart ausgeformt sind, dass sie einen nach außen gerichteten Steg 44 bilden. In diesen Steg 44 werden seitlich ausgebildete und nach innen gerichtete Hacken 45 der Abdeckung 2 eingehängt. Gleichzeitig sorgt eine nach außen gerichtete Verzahnung 46 für den entsprechenden sicheren Halt der Abdeckung 2 an dem Profilkörper 15.

Da allerdings an den Stirnenden des Kanals 11 der innere Profilkörper 40 vorzugsweise kürzer ist, als der äußere Profilkörper 15, ist in diesem Bereich eine besondere Vorgehensweise zur Fixierung der Silikonabdeckung 2 vorgesehen. Wie Figur 22 zeigt, ist hierzu zusätzlich ein stirnseitig angebrachtes L-förmiges Silikonprofil 47 vorgesehen, welches auf die Abdeckung 2 geklebt wird. Mit Hilfe einer Klemmfeder 48, welche an der Endkappe 49 der Anordnung fixiert ist, wird dann die Silikonabdeckung 2 auch in diesem Endbereich befestigt, sodass letztendlich über die gesamte Länge der Anordnung hinweg eine zuverlässige Halterung der Abdeckung 2 ermöglicht ist.

Anzumerken ist, dass das innere Profilelement 40 auch aus einer Mehrzahl U-förmiger Teile gebildet sein könnte. Diese würden in ihrer Form dann jeweils zwei einander gegenüberliegend, leicht versetzt zueinander angeordneten Segmenten 43 entsprechen, welche über einen mittleren Steg miteinander verbunden sind. Ebenso wie bei der Verwendung eines einzelnen länglichen Profilteilkörpers wird auch hier der Vorteil erzielt, dass die Handhabung insgesamt erleichtert wird, da durch die doppelwandige Ausgestaltung des Kanals die Segmente nicht einfach auseinanderfallen können.

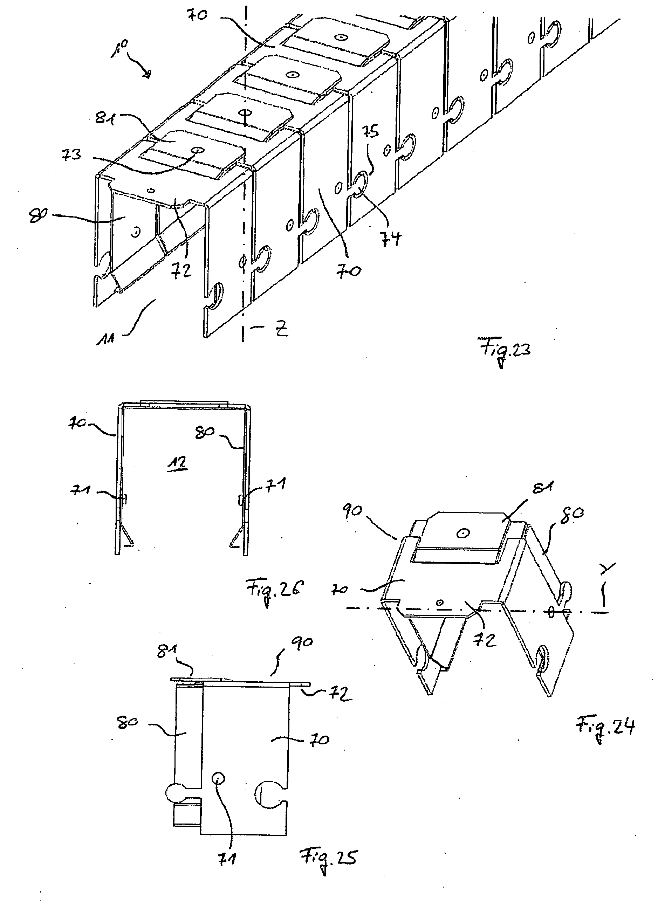

Eine weitere alternative Ausführungsform ist schließlich in den Figuren 23 bis 26 gezeigt, wobei hier allerdings kein länglicher Profilkörper mehr zum Einsatz kommt. Stattdessen wird der Kanal 11 durch die Aneinanderreihung einer Vielzahl U-förmiger, nach unten geöffneter Profilelemente 70, 80 erzielt. Diese sind derart miteinander verbunden, dass wiederum eine Biegbarkeit der Anordnung 10 in zwei aufeinander senkrecht stehenden Achsen erzielt wird.

Bei dem dargestellten Ausführungsbeispiel der Figuren 23 bis 26 kommen genau genommen zwei unterschiedliche Profilelemente zum Einsatz. Zum einen äußere Profilelemente 70 sowie zum anderen innere Profilelemente 80. Jeweils zwei verschiedene Elemente 70, 80 werden dabei zu einer Baueinheit 90, wie sie in den Figuren 24 und 25 dargestellt ist, zusammengefügt, wobei die Verbindung über zwei an den Seitenwänden befindliche Nietverbindungen 71 erfolgt. Die Elemente 70 und 80 sind also jeweils um die in Figur 24 angedeutete Achse Y zueinander leicht verschwenkbar.

Bei einer einzelnen Baueinheit 90 ist ferner vorgesehen, dass das innere Element 80 leicht versetzt zu dem äußeren Element 70 angeordnet ist. An der Oberseite des inneren Elements 80 ist hierbei eine Lasche 81 vorgesehen, welche im zusammengefügten Zustand mehrerer Baueinheiten 90, wie dies in Figur 23 dargestellt ist, eine Lasche 72 des nachfolgenden äußeren Profilelements 70 überragt. Hier findet ebenfalls eine Verbindung der Baueinheiten 90 über eine weitere Nietverbindung 73 statt. Diese Verbindung hat wiederum zur Folge, dass zwei benachbarte Einheiten um die in Figur 23 angedeutete Achse Z zueinander verschwenkt werden können, wodurch letztendlich die Biegbarkeit der gesamten Anordnung in der gewünschten Weise erzielt wird.

Auf diese Weise wird letztendlich eine Anordnung erzielt, welche hinsichtlich ihrer Eigenschaften in Bezug auf die Biegbarkeit den Ausführungsformen in den zuvor diskutierten Figuren ähnelt. Die Biegbarkeit wird nunmehr allerdings dadurch erzielt, dass die einzelnen Profilelemente 70, 80 alternierend in geeigneter Weise miteinander verbunden sind. Die versetzte Anordnung zwischen äußerem Profilelement 70 und innerem Profilelement 80 hat wiederum zur Folge, dass die Übergänge zwischen zwei aufeinanderfolgenden äußeren Elementen 70 durch das entsprechende innere Element 80 verdeckt sind. Auch hier wird also das Eindringen von Schmutz und Insekten verhindert. Die Seitenwände der äußeren Profilelemente 70 sind wiederum mit den zuvor beschriebenen Vorsprüngen 74 und Ausnehmungen 75 versehen, über welche die Biegebegrenzung erzielt wird. Ferner können wiederum die freien Enden des inneren Profilelements 80 derart abgewinkelt ausgebildet sein, dass sie das Einhängen der Abdeckung 2 ermöglichen. Die in Längsrichtung aneinandergereihten Profilelemente 80 bilden hierbei eine Innenschale wie bei dem Ausführungsbeispiel der Figuren 18 bis 22. Sie sind dementsprechend vorzugsweise ebenfalls reflektierend ausgebildet.

Insgesamt wird also durch alle vorgeschlagenen Varianten letztendlich ein System zur Bildung eines länglichen Lichtbandes zur Verfügung gestellt, welches sich in äußerst flexibler Weise auch an komplizierte Wand- oder Deckenstrukturen anpasst.

## Patentansprüche

1. Befestigungsvorrichtung (10) zur Befestigung wenigstens einer Leuchteneinheit (30) in einer Einbauöffnung einer Wand oder Decke (101),
wobei die Befestigungsvorrichtung (10) einen Kanal (11) zur Aufnahme der wenigstens einen Leuchteneinheit (30) bildet,
wobei der Kanal (11) zumindest abschnittsweise durch einen einstückigen Profilkörper (15) gebildet ist, der U-förmig ausgestaltet und derart mit Schlitzen (16) versehen ist, dass der Profilkörper (15) um zwei Achsen (Y, Z), die im wesentlichen senkrecht aufeinander stehen, biegbar ist,
wobei innerhalb des Profilkörpers (15) eine Innenschale ausgebildet ist, welche durch einen inneren Profilkörper (40) gebildet ist,
wobei der innere Profilkörper (40) mit Schlitzen (42) versehen ist, welche wiederum derart angeordnet und ausgebildet sind, dass sie ein Biegen des inneren Profilkörpers (40) um zwei im Wesentlichen senkrecht aufeinander stehende Achsen ermöglichen.

2. Befestigungsvorrichtung nach Anspruch 1,
**dadurch gekennzeichnet,**
**dass** sich die Schlitze (16) alternierend jeweils von den Enden der beiden Seitenschenkel (15a, 15b) des U-förmigen Profilkörpers (15) bis in den Bereich des Mittelschenkels (15c) erstrecken, so dass die Seitenschenkel (15a, 15b) in versetzt zueinander angeordnete Segmente (17a, 17b) unterteilt sind.

3. Befestigungsvorrichtung nach Anspruch 2,
**dadurch gekennzeichnet,**
**dass** die Schlitze (16) im Bereich der Seitenschenkel (15a, 15b) jeweils ausgewölbt bzw. schleifenförmig ausgebildet sind.

4. Befestigungsvorrichtung nach Anspruch 2 oder 3,
**dadurch gekennzeichnet,**
**dass** die Schlitze (16) im Bereich des Mittelschenkels (15c) jeweils in eine etwa kreisförmige Ausnehmung münden.

5. Befestigungsvorrichtung nach einem der Ansprüche 2 bis 4,
**dadurch gekennzeichnet,**
**dass** die Segmente (17a, 17b) der Seitenschenkel (15a, 15b) des Profilkörpers (15) jeweils eine Ausnehmung (23) aufweisen.

6. Befestigungsvorrichtung nach einem der vorherigen Ansprüche,
**dadurch gekennzeichnet,**
**dass** durch die Innenschale die Schlitze (15) des Profilkörpers abgedeckt werden.

7. Wand- und/oder Deckensystem zur Beleuchtung, aufweisend
- eine durch eine Wand und/oder eine Decke (101) gebildete längliche Einbauöffnung,
- eine in der Einbauöffnung angeordnete Befestigungsvorrichtung (10) zur Befestigung wenigstens einer Leuchteneinheit (30) in der Einbauöffnung,
wobei die Befestigungsvorrichtung einen Kanal (11) zur Aufnahme der wenigstens einen Leuchteneinheit (30) bildet,
wobei der Kanal (11) zumindest abschnittsweise durch einen einstückigen Profilkörper (15) gebildet ist, der U-förmig ausgestaltet und derart mit Schlitzen (16) versehen ist, dass der Profilkörper (15) um zwei Achsen (Y, Z), die im Wesentlichen senkrecht aufeinander und im Wesentlichen senkrecht zur Längsachse (X) des Systems stehen, biegbar ist sowie
- mindestens eine in dem durch die Befestigungsvorrichtung (10) gebildeten Kanal (11) angeordnete Leuchteneinheit (30).

8. Wand- und/oder Deckensystem nach Anspruch 7,
**dadurch gekennzeichnet,**
**dass** der durch die Befestigungsvorrichtung (10) gebildete Kanal (11) durch eine transparente Lichtemissionsplatte (2) abgedeckt ist.

9. Wand- und/oder Deckensystem nach Anspruch 8,
**dadurch gekennzeichnet,**
**dass** die Lichtemissionsplatte (2) aus einem flexiblen Material, insbesondere aus Silikon eines geringen Härtegrades gebildet ist.

10. Wand- und/oder Deckensystem nach Anspruch 8 oder 9,
**dadurch gekennzeichnet,**
**dass** die Lichtemissionsplatte (2) an ihren Randbereichen Klemmstege (3) zum Befestigen an dem Profilkörper (15) oder einer in dem Profilkörper (15) angeordneten Innenschale aufweist.

11. Wand- und/oder Deckensystem nach Anspruch 10,
**dadurch gekennzeichnet,**
**dass** die Klemmstege (3) eine Verzahnung (4) aufweisen.

12. Wand- und/oder Deckensystem nach Anspruch 10 oder 11,
**dadurch gekennzeichnet,**
**dass** die Klemmstege (3) aus einem Material gebildet sind, welches im Vergleich zu dem restlichen Bereich der Lichtemissionsplatte (2) eine höhere Härte aufweist.

13. Wand- und/oder Deckensystem zur Beleuchtung, aufweisend
- eine durch eine Wand und/oder eine Decke (101) gebildete längliche Einbauöffnung,
- eine in der Einbauöffnung angeordnete Befestigungsvorrichtung (10) zur Befestigung wenigstens einer Leuchteneinheit (30) in der Einbauöffnung,
wobei die Befestigungsvorrichtung einen Kanal (11) zur Aufnahme der wenigstens einen Leuchteneinheit (30) bildet,
wobei der Kanal (11) durch mehrere, im Wesentlichen U-förmig ausgebildete Profilelemente (70, 80) gebildet ist, welche derart aneinandergefügt sind, dass der Kanal (11) um zwei Achsen (Y, Z), die im Wesentlichen senkrecht aufeinander stehen, biegbar ist sowie
- mindestens eine in dem durch die Befestigungsvorrichtung (10) gebildeten Kanal (11) angeordnete Leuchteneinheit (30).

14. Wand- und/oder Deckensystem nach Anspruch 13,
**dadurch gekennzeichnet,**
**dass** der Kanal (11) durch alternierend angeordnete, verschieden ausgebildete Profilelemente (70, 80) gebildet ist, wobei jeweils zwei verschiedene Profilelemente (70, 80) derart zu einer Baueinheit (90) miteinander verbunden sind, dass sie gegeneinander um eine erste Achse (Y) zumindest teilweise verschwenkbar sind, und wobei zwei benachbarte Baueinheiten (90) derart miteinander verbunden sind, dass sie gegeneinander um eine zweite Achse (Z) zumindest teilweise verschwenkbar sind.

15. Wand- und/oder Deckensystem nach Anspruch 13 oder 14,
**dadurch gekennzeichnet,**
**dass** der durch die Befestigungsvorrichtung (10) gebildete Kanal (11) durch eine transparente Lichtemissionsplatte (2) abgedeckt ist.

16. Wand- und/oder Deckensystem nach Anspruch 15,
**dadurch gekennzeichnet,**
**dass** die Lichtemissionsplatte (2) aus einem flexiblen Material, insbesondere aus Silikon eines geringen Härtegrades gebildet ist.

17. Wand- und/oder Deckensystem nach Anspruch 15 oder 16,
**dadurch gekennzeichnet,**
**dass** die Lichtemissionsplatte (2) an ihren Randbereichen Klemmstege (3) zum Befestigen an dem Profilkörper (15) oder einer in dem Profilkörper (15) angeordneten Innenschale aufweist.

18. Wand- und/oder Deckensystem nach Anspruch 17,
**dadurch gekennzeichnet,**
**dass** die Klemmstege (3) eine Verzahnung (4) aufweisen.

19. Wand- und/oder Deckensystem nach Anspruch 17 oder 18,
**dadurch gekennzeichnet,**
**dass** die Klemmstege (3) aus einem Material gebildet sind, welches im Vergleich zu dem restlichen Bereich der Lichtemissionsplatte (2) eine höhere Härte aufweist.

## Claims

1. Fastening device (10) for fastening at least one lighting unit (30) in an installation opening through a wall or ceiling (101),
wherein the fastening device (10) forms a channel (11) to receive the at least one lighting unit (30),
wherein the channel (11) is formed at least in sections by a one-piece profile body (15) which is U-shaped and is provided with slots (16) in such a way that the profile body (15) may be bent about two axes (Y, Z) which are substantially perpendicular to one another,
wherein an inner shell is formed within the profile body (15), and is formed by one or more profile bodies (40),
wherein the further profile body (41) is provided with slots (42) which are arranged and formed in such a way that they allow the further profile body (40) to be bent about two axes which are substantially perpendicular to one another.

2. Fastening device according to claim 1,
**characterized in that**
the slots (16) each alternately extend from the ends of the two side limbs (15a, 15b) of the U-shaped profile body (15) to the region of the middle limb (15c), so that the side limbs (15a, 15b) are divided in segments (17a, 17b) arranged offset to one another.

3. Fastening device according to claim 2,
**characterized in that**
the slots (16) in the region of the side limbs (15a, 15b) are each arched or loop-shaped.

4. Fastening device according to claim 2 or 3,
**characterized in that**
the slots (16) in the region of the middle limb (15c) each open into an approximately circular recess.

5. Fastening device according to one of the claims 2 to 4,
**characterized in that**
the segments (17a, 17b) of the side limbs (15a, 15b) of the profile body (15) each comprise a recess (23).

6. Fastening device according to one of the preceding claims,
**characterized in that**
the slots (15) of the profile body are covered by the inner shell.

7. Wall and/or ceiling system for the lighting, comprising
- an installation opening formed through a wall and/or a ceiling (101)
- a fastening device (10) arranged in the installation opening to fasten at least one lighting unit (30) in the installation opening,
wherein the fastening device forms a channel (11) to receive the at least one lighting unit (30),
wherein the channel (11) is at least sectionally formed by a one-piece profile body (15) which is U-shaped and is provided with slots (16) in such a way that the profile body (15) may bend about two axes (Y, Z) which are substantially perpendicular to one another and approximately perpendicular to the longitudinal axis (X) of the profile body (15), as well as
- at least one lighting unit (30) arranged in the channel (11) formed by the fastening device (10).

8. Wall and/or ceiling system according to claim 7,
**characterized in that**
the channel (11) formed by the fastening device (10) is covered by a transparent light emission plate (2).

9. Wall and/or ceiling system according to claim 8,
**characterized in that**
the light emission plate (2) is formed from a flexible material, in particular from silicone, of a low degree of hardness.

10. Wall and/or ceiling system according to claim 8 or 9,
**characterized in that**
the light emission plate (2) has clamping webs (3) at its edge regions for fastening to the profile body (15) or to an inner shell arranged in the profile body (15).

11. Wall and/or ceiling system according to claim 10,
**characterized in that**
the clamping webs (3) have a toothing (4).

12. Wall and/or ceiling system according to claim 10 or 11,
**characterized in that**
the clamping webs (3) are formed from a material which has a higher hardness compared to the remaining region of the light emission plate (2).

13. Wall and/or ceiling system for lighting, comprising
- an installation opening formed through a wall and/or ceiling (101)
- a fastening device (10) arranged in the installation opening for fastening at least one lighting unit (30) in the installation opening,
wherein the fastening device forms a channel (11) to receive the at least one lighting unit (30), wherein the channel (11) is formed by a plurality of substantially U-shaped profile elements (70, 80) which are so joined to one another that the channel (11) may bend about two axes (Y, Z), which are substantially perpendicular to one another, as well as
- at least one lighting unit (30) arranged in the channel (11) formed by the fastening device (10).

14. Fastening device according to claim 13,
**characterized in that**
the channel (11) is formed by alternately arranged, differently shaped profile elements (70, 80), wherein two different profile elements (70, 80) are so connected to one another in a structural unit (90) that they are at least partially pivotable about a first axis (Y), and wherein two adjacent structural units (90) are so connected to one another that they may be pivoted at least partially about a second axis (Z).

15. Wall and/or ceiling system according to claim 13 or 14,
**characterized in that**
the channel (11) formed by the fastening device (10) is covered by a transparent light emission plate (2).

16. Wall and/or ceiling system according to claim 15,
**characterized in that**
the light emission plate (2) is formed from a flexible material, in particular from silicone, of a low degree of hardness.

17. Wall and/or ceiling system according to claim 15 or 16,
**characterized in that**
the light emission plate (2) has clamping webs (3) at its edge regions for fastening to the profile body (15) or to an inner shell arranged in the profile body (15).

18. Wall and/or ceiling system according to claim 17,
**characterized in that**
the clamping webs (3) have a toothing (4).

19. Wall and/or ceiling system according to claim 17 or 18,
**characterized in that**
the clamping webs (3) are formed from a material which has a higher hardness compared to the remaining region of the light emission plate (2).

## Revendications

1. Dispositif de fixation (10) destiné à la fixation d'au moins une unité d'éclairage (30) dans une ouverture de montage d'une paroi ou d'un plafond (101),
le dispositif de fixation (10) formant un canal (11) destiné à recevoir l'unité d'éclairage (30) au moins au nombre de un,
le canal (11) étant, au moins par tronçons, formé par un corps profilé (15) d'une seule pièce qui est constitué en U et qui est muni de fentes (16) de telle sorte que le corps profilé (15) peut fléchir autour de deux axes (Y, Z) qui sont essentiellement perpendiculaires entre eux,
une coque interne étant configurée à l'intérieur du corps profilé (15), qui est formée par un ou plusieurs corps profilés (40),
l'autre corps profilé (40) étant muni de fentes (42) qui sont à leur tour disposées et configurées de telle sorte qu'elles permettent une flexion de l'autre corps profilé (40) autour de deux axes essentiellement perpendiculaires entre eux.

2. Dispositif de fixation (10) selon la revendication 1,
**caractérisé en ce que**
les fentes (16) s'étendent de façon alternée respectivement à partir des extrémités des deux branches latérales (15a, 15b) du corps profilé (15) en U jusque dans la zone de la branche centrale (15c) de telle sorte que les branches latérales (15a, 15b) sont divisées en segments (17a, 17b) disposés de façon décalée entre eux.

3. Dispositif de fixation (10) selon la revendication 2,
**caractérisé en ce que**
les fentes (16) sont disposées respectivement de façon bombée ou respectivement en forme de boucle dans la zone des branches latérales (15a, 15b).

4. Dispositif de fixation (10) selon la revendication 2 ou 3,
**caractérisé en ce que**
les fentes (16) débouchent respectivement dans un creux à peu près circulaire dans la zone de la branche centrale (15c).

5. Dispositif de fixation (10) selon l'une des revendications 2 à 4,
**caractérisé en ce que**
les segments (17a, 17b) des branches latérales (15a, 15b) du corps profilé (15) présentent respectivement un creux (23).

6. Dispositif de fixation selon l'une des revendications précédentes,
**caractérisé en ce que**
les fentes (15) du corps profilé sont recouvertes par la coque interne.

7. Système de paroi et/ou de plafond destiné à l'éclairage, présentant
- une ouverture de montage formée par une paroi et/ou un plafond (101),
- un dispositif de fixation (10) disposé dans l'ouverture de montage destiné à la fixation d'au moins une unité d'éclairage (30) dans l'ouverture de montage, le dispositif de fixation formant un canal (11) destiné à recevoir l'unité d'éclairage (30) au moins au nombre de un,
le canal (11) étant formé au moins par tronçons par un corps profilé (15) d'une seule pièce qui est constitué en U et muni de fentes (16) de telle sorte que le corps profilé (15) peut fléchir autour de deux axes (Y, Z) qui sont essentiellement perpendiculaires entre eux et à peu près perpendiculaires à l'axe longitudinal (X) du corps profilé (15), ainsi
- qu'au moins une unité d'éclairage (30) disposée dans le canal (11) formé par le dispositif de fixation (10).

8. Système de paroi et/ou de plafond selon la revendication 7,
**caractérisé en ce que**
le canal (11) formé par le dispositif de fixation (10) est recouvert par une plaque d'émission lumineuse (2) transparente.

9. Système de paroi et/ou de plafond selon la revendication 8,
**caractérisé en ce que**
la plaque d'émission lumineuse (2) est formée en matériau flexible, en particulier en silicone d'un faible taux de dureté.

10. Système de paroi et/ou de plafond selon la revendication 8 ou 9,
**caractérisé en ce que**
la plaque d'émission lumineuse (2) présente sur ses zones de bord des barrettes de serrage (3) destinées à la fixation sur le corps profilé (15) ou sur une coque interne disposée dans le corps profilé (15).

11. Système de paroi et/ou de plafond selon la revendication 10,
**caractérisé en ce que**
les barrettes de serrage (3) présentent une denture (4).

12. Système de paroi et/ou de plafond selon la revendication 10 ou 11,
**caractérisé en ce que**
les barrettes de serrage (3) sont formées dans un matériau qui présente une dureté plus élevée comparée au reste de la zone de la plaque d'émission lumineuse (2).

13. Système de paroi et/ou de plafond destiné à l'éclairage, présentant
- une ouverture de montage formée par une paroi et/ou un plafond (101),
- un dispositif de fixation (10) disposé dans l'ouverture de montage destiné à la fixation d'au moins une unité d'éclairage (30) dans l'ouverture de montage, le dispositif de fixation formant un canal (11) destiné à recevoir l'unité d'éclairage (30) au moins au nombre de un,
le canal (11) étant formé par plusieurs éléments profilés (70, 80) constitués essentiellement en U qui sont assemblés les uns aux autres de telle sorte que le canal (11) peut fléchir autour de deux axes (Y, Z) qui sont essentiellement perpendiculaires entre eux, ainsi
- qu'au moins une unité d'éclairage (30) disposée dans le canal (11) formé par le dispositif de fixation (10).

14. Dispositif de fixation selon la revendication 13,
**caractérisé en ce que**
le canal (11) est formé par des éléments profilés (70, 80) disposés de façon alternée et constitués de façons différentes, deux éléments profilés (70, 80) différents étant respectivement raccordés l'un à l'autre pour former un module (90) de telle sorte qu'ils peuvent pivoter au moins partiellement l'un par rapport à l'autre autour d'un premier axe (Y), et deux modules (90) voisins étant raccordés l'un à l'autre de telle sorte qu'il peuvent pivoter au moins partiellement l'un par rapport à l'autre autour d'un deuxième axe (Z).

15. Système de paroi et/ou de plafond selon la revendication 13 ou 14,
**caractérisé en ce que**
le canal (11) formé par le dispositif de fixation (10) est recouvert par une plaque d'émission lumineuse (2) transparente.

16. Système de paroi et/ou de plafond selon la revendication 15,
**caractérisé en ce que**
la plaque d'émission lumineuse (2) est formée en matériau flexible, en particulier en silicone d'un faible taux de dureté.

17. Système de paroi et/ou de plafond selon la revendication 15 ou 16,
**caractérisé en ce que**
la plaque d'émission lumineuse (2) présente sur ses zones de bord des barrettes de serrage (3) destinées à la fixation sur le corps profilé (15) ou sur une coque interne disposée dans le corps profilé (15).

18. Système de paroi et/ou de plafond selon la revendication 17,
**caractérisé en ce que**
les barrettes de serrage (3) présentent une denture (4).

19. Système de paroi et/ou de plafond selon la revendication 17 ou 18,
**caractérisé en ce que**
les barrettes de serrage (3) sont formées dans un matériau qui présente une dureté plus élevée comparée au reste de la zone de la plaque d'émission lumineuse (2).
